**Europäisches Patentamt**

**European Patent Office**

**Office européen des brevets**

(19)

(11) Veröffentlichungsnummer : **0 084 316
B1**

(12)

# EUROPÄISCHE PATENTSCHRIFT

(45) Veröffentlichungstag der Patentschrift :
11.12.85

(51) Int. Cl.⁴ : **B 01 F  3/04**, C 02 F  3/16

(21) Anmeldenummer : 83100021.1

(22) Anmeldetag : 04.01.83

(54) Verfahren und Vorrichtung zum Begasen und Umwälzen von Flüssigkeiten.

(30) Priorität : 13.01.82 DE 3200701

(43) Veröffentlichungstag der Anmeldung :
27.07.83 Patentblatt 83/30

(45) Bekanntmachung des Hinweises auf die Patenterteilung : 11.12.85 Patentblatt 85/50

(84) Benannte Vertragsstaaten :
AT BE CH DE FR GB IT LI NL SE

(56) Entgegenhaltungen :
EP-A- 0 026 493
EP-A- 0 027 912
AT-B-  206 869
AT-B-  327 830
DE-A- 1 708 604
DE-A- 2 606 121
DE-C-  681 943
DE-C- 1 020 606
US-A- 2 295 391
US-A- 2 461 720

(73) Patentinhaber : Maschinenfabrik Hellmut Geiger GmbH & Co. KG.
Hardeckstrasse 3
D-7500 Karlsruhe 21 (DE)

(72) Erfinder : Nestmann, Franz, Dipl.-Ing.
Rheinstrasse 31
D-7812 Bad Krozingen (DE)
Erfinder : Weske, Johannes-Robert, Prof. Dr.
Postfach 1 16
Sandy Spring Maryland 20860 (US)

(74) Vertreter : Moser, Herbert, Dr.-Ing.
Nowackanlage 15
D-7500 Karlsruhe (DE)

## Beschreibung

Die Erfindung betrifft ein Verfahren zum Begasen und Umwälzen von als Flüssigkeit fließfähigen Medien, insbesondere zum Belüften von Belebtschlamm im Belüftungsbecken von Kläranlagen, wobei mit Hilfe eines unterhalb der Flüssigkeitsoberfläche angeordneten, eine rotierende Strömung erzeugenden Förderelementes, eine zwischen der Oberfläche der Flüssigkeit zum Förderelement hin und der Beckensohle torusförmig kreisende Strömung erzeugt wird, und bei dem durch das Förderelement von der Flüssigkeitsoberfläche sich zum Förderelement erstreckende Wirbeltromben erzeugt werden, wobei das von ihnen angesaugte Gas in der Flüssigkeit blasenförmig dispergiert wird. Ferner sind zweckmäßige Vorrichtungen zur Durchführung des Verfahrens angegeben. Das Zuführen von Gas in Flüssigkeiten spielt bei vielen verfahrenstechnischen Prozessen eine Rolle, sei es zur bloßen Anreicherung der Flüssigkeit mit Gasblasen, zur Bewerkstelligung mechanischer Transportbewegungen in der Flüssigkeit oder zu Zwecken des Stoffaustausches. Das letztgenannte Ziel wird großtechnisch, insbesondere bei Belebtschlamm in Kläranlagen angestrebt, indem dem Klärschlamm Sauerstoff, meist in Form von Luftsauerstoff, zugeführt wird. Hierbei unterscheidet man im wesentlichen zwei Verfahren, nämlich einerseits das Eintragen des Luftsauerstoffs aus oberflächennahen Luftschichten und das Zuführen von Druckluft von der Beckensohle her.

Das Belüften von Belebtschlamm von der Beckensohle her mittels Druckluft führt im allgemeinen zu einem sehr guten Sauerstoffertrag, der das Verhältnis von eingetragenem Sauerstoff zu installierter Leistung wiedergibt. Die Druckluftdüsen werden dabei so angeordnet, daß aufgrund einer Art Injektorwirkung zusätzlich eine kreisende Umwälzbewegung im Becken entsteht, um den Stoffaustausch zu verbessern. Von Nachteil bei diesem Verfahren sind jedoch die relativ hohen Installationskosten und die Verstopfungsgefahr, da sich naturgemäß nicht vermeiden läßt, daß die Druckluftanlage zeitweise stillgesetzt wird, mit der Folge, daß Schlammpartikel in die Düsen und die Zuleitungsrohre eindringen, wobei diese dann häufig von innen her zuwachsen. Der Betrieb und die Wartung solcher Anlagen erfordert daher qualifiziertes Fachpersonal, was auf dem Gebiet der Klärtechnik nicht immer vorausgesetzt werden kann.

Das Eintragen von Luftsauerstoff aus oberflächennahen Luftschichten erfolgt entweder durch sogenannte Kreiselüfter, Walzenbelüfter oder durch luftansaugende Rührer. Letztere haben wegen des mäßigen Sauerstoffertrags keine große Verbreitung gefunden, weshalb hier nur auf die beiden erstgenannten Belüfter eingegangen wird.

Beim Walzenbelüfter läuft eine mit Schaufeln oder dgl. versehene Walze mit horizontaler Achse derart um, daß die Schaufeln in die Oberfläche eingreifen und Schlamm bzw. Flüssigkeit durch die Luft schleudern. Durch die stark turbulente oberflächennahe Strömung, die aufgewirbelten Flüssigkeitstropfen und die umlaufende Walze findet sowohl in der flüssigen Phase zwischen den Gasblasen und der Flüssigkeit, als auch in der Luft zwischen den Flüssigkeitstropfen und dem Luftsauerstoff ein Stoffaustausch statt.

Kreiselbelüfter, die etwa in beckenmitte angeordnet sind, transportieren die Flüssigkeit von der Beckensohle her über ein Ansaugrohr nach oben bis an die Oberfläche und schleudern sie dort über Verteilerkanäle bzw. Rohre heraus. Hierbei entsteht wiederum eine stark turbulente Wellenbewegung an der Oberfläche. Ferner werden Flüssigkeitstropfen in die Atmosphäre geschleudert. Die weiter außen wieder eintauchenden Tropfen und die Wellenbewegung führen ferner dazu, daß vornehmlich im äußeren Bereich Luftblasen in die Tiefe transportiert werden. Auch hier findet also ein Stoffaustausch an den Tropfen, den Blasen und an der aufgerauhten Flüssigkeitsoberfläche statt.

Bei den vorgenannten Kreisel- und Walzenbelüftern ist der Sauerstoffertrag merklich geringer als bei der Druckgasbelüftung, jedoch weist diese Methode andere Vorteile auf, die für eine weite Verbreitung gesorgt haben. Hier sind insbesondere der relativ geringe Installationsaufwand, die leichte Zugänglichkeit und die Wartungsfreundlichkeit zu nennen. Gleichwohl können diese Vorteile die Nachteile nicht aufwiegen, so daß in neueren Anlagen fast nur noch die Druckluftbegasung eingebaut wird.

Weiterhin sind diese Belüfter dynamisch sehr stark beansprucht, so daß aufwendige Getriebemotoren verwendet werden müssen, wobei diese dynamische Beanspruchung insbesondere von dem Getriebe und den Lagern aufgenommen werden muß, die deshalb sehr leicht verschleissen.

Mit der mechanischen Belüftung wird ein Großteil des oberflächennahen Schlamms und Wassers in die Luft geschleudert und versprüht, woraus eine entsprechende Aerosolbildung resultiert. Die Aerosole können bei entsprechend feiner Dispersion fortgetragen werden und führen zudem zu einer verstärkten Geruchsbelästigung. Schließlich bringt die turbulente Strömung an der Wasseroberfläche und das ständige Verspritzen der Flüssigkeit sowie der Umlauf des Belüfters an der Oberfläche ständige Plätschergeräusche und damit eine unerwünschte Lärmbelästigung mit sich, die noch durch die Laufgeräusche des Lüfters in der Flüssigkeit vermehrt wird.

Zum Stande der Technik gehört ferner eine Mischvorrichtung nach der US-A 2 461 720. Diese Mischvorrichtung dient zur Herstellung der verschiedensten Mischungen zwischen Flüssigkeiten und Gasen sowie Flüssigkeiten und Feststoffen. Unterhalb des Flüssigkeitsspiegels befindet sich ein Rotor in Form eines offenen Kegelstumpfes, welcher mit gezahnten Rippenleisten versehen ist. Diese liegen gegenüber gleichfalls gezahnten gehäusefesten Stützteilen. Durch die zwischen den gezahnten Rippen des Rotors und den gezahnten Stegen des Stators entstehende Zwangsströmung mit Komponenten in verschiedenen Hauptströmungsrichtungen soll die gewünschte Mischung erzielt werden.

Zum Stande der Technik gehört ferner eine Belüftungsvorrichtung nach der EP-A 0 026 493. Hierbei ist ein Förderelement mit einem kegelförmig erweiterten Ansaugtrichter des feststehenden zylinderförmigen Gehäuses unmittelbar unter der Flüssigkeitsoberfläche angeordnet und mit einem im Gehäuse liegenden angetriebenen Schraubenflügel versehen. Durch dieses Förderelement wird zwischen Oberfläche und Beckensohle eine kreisende Strömung in Torusform erzeugt, die im oberflächennahen Bereich zur Drehachse des Schraubenflügels hin gerichtet ist. Außerdem entsteht im Innenraum des Gehäuses eine zwangsgeführte Ansaugströmung. Ausgehend von der eine Senke bildenden Ansaugströmung im Ansaugtrichter, können Wirbeltromben entstehen, die jedoch in vielen Fällen durch Wandberührung bzw. Berührung mit den zur Strömungsstabilisierung in den Ansaugtrichter eingebauten Leitschaufeln bereits oberflächennah zerstört werden.

Die Erfindung geht von der Aufgabenstellung aus, ein Belüftungsverfahren anzugeben, mit dem eine wirksame Belüftung von der Oberfläche her durchgeführt werden kann. Außerdem soll ohne ungünstige Aerosolbildung und Lärmbelästigung ein hoher Sauerstoffertrag erreicht werden.

Die Lösung dieser Aufgabenstellung erfolgt gemäß der Erfindung dadurch, daß die Wirbeltromben von einem in etwa ringförmigen Bereich an der Flüssigkeitsoberfläche zum Umfang des Förderelementes hin sich frei ausbreitend erzeugt werden. Durch das erfindungsgemäße Verfahren wird im Gegensatz zu der vorbekannten mechanischen Belüftung die Luft nicht durch turbulente Strömung an der Flüssigkeitsoberfläche in die Flüssigkeit eingetragen, sondern durch fortgesetzte Bildung von einer oder mehreren Wirbeltromben eingesaugt, die erst in entsprechendem Abstand unterhalb der Flüssigkeitsoberfläche blasenförmig dispergiert werden.

Der Begriff « freie Ausbreitung der Wirbeltromben » soll im Zusammenhang der vorliegenden Beschreibung Wirbelschläuche bezeichnen, die von einer zufälligen Ansatzstelle an der Flüssigkeitsoberfläche ausgehen und an dieser Stelle eine Oberflächensenke bilden.

Bei diesem Verfahren entfallen alle mit der Aufwirbelung der Oberfläche zusammenhängenden Nachteile, wie Aerosolbildung und Lärmbelästigung. Die Luftblasen werden in der Tiefe der Flüssigkeit erzeugt, und ihre Erzeugung bleibt nicht dem Zufall überlassen, wie dies bei der mechanischen Belüftung der Fall ist. Hieraus resultiert zunächst der Effekt, daß die Luftblasen aufgrund der Umwälzbewegung auch tatsächlich das Becken von der Mitte her zur Beckensohle und von dort nach außen hin aufsteigend durchwandern. Dies ist bei der mechanischen Belüftung nicht gewährleistet, denn dabei werden die Luftblasen über die Oberfläche im wesentlichen im Bereich des Beckenrandes eingetragen und verharren dort meist im Schwebezustand. Eine Aerosolbildung tritt praktisch überhaupt nicht mehr ein, ebenso ist die Geräuschbildung auf ein Minimum reduziert, da Plätschergeräusche an der Oberfläche entfallen.

Das erfindungsgemäße Verfahren kann in verschiedener Weise ausgeführt werden. Eine Art der Verfahrensführung besteht darin, eine die oberflächennahe Flüssigkeit zu einem Zentrum und dann frei in die Tiefe fördernde Strömung derart zu erzeugen, daß sich in einem ringförmigen Bereich um das Zentrum Wirbeltromben frei ausbreiten. Die Erzeugung des Zentrums erfolgt vorzugsweise etwa in der Beckenmitte. Bei dieser Verfahrensführung werden die Wirbeltromben unmittelbar durch die Umwälzströmung erzeugt, wobei diese die Wirbeltromben in der Tiefe zugleich mechanisch zerschlägt und die eingesaugte Luft blasenförmig dispergiert. Dabei arbeitet das erfindungsgemäße Verfahren mit einer gegenüber den herkömmlichen Kreisellüftern umgekehrten Strömungsrichtung, die den Lufteintrag in die Tiefe begünstigt. Am Beckenrand wirken Strömungskraft und Auftriebskraft der Blasen in einer Richtung, so daß die dort noch vorhandenen Blasen nicht im Schwebezustand verharren, sondern aufsteigen.

Eine andere vorteilhafte Verfahrensführung kann darin bestehen, · die oberflächennahe Flüssigkeit umfangsseitig in einen ringförmigen Ansaugspalt einzuziehen und von dort in die Tiefe zu fördern, so daß ebenfalls sich von der Oberfläche her frei ausbreitende Wirbeltromben erzeugt werden.

Der weitaus günstigere Sauerstoffertrag dürfte folgende Ursachen haben :

Bei jeder Art der Belüftung findet an der Oberfläche ein Stoffaustausch zwischen Luftsauerstoff und Flüssigkeit statt. Dieser Anteil des Stoffaustausches liegt bei einer turbulenten Oberfläche, wie sie bei der vorbekannten mechanischen Belüftung erzeugt wird, etwas höher als bei einer beruhigten Oberfläche, die beim erfindungsgemäßen Verfahren auftritt. Der hierdurch erreichte anteilige Sauerstoffertrag ist jedoch sehr gering, so daß diese Unterschiede außer Betracht bleiben können. Ein weiterer Anteil des Sauerstoffertrages ergibt sich bei der mechanischen Belüftung durch Austauschvorgänge an der Oberfläche der durch die Luft bewegten Tropfen einerseits und an der Grenzfläche zwischen Blasen und Flüssigkeit andererseits. Die Kenntnisse über Diffusionsvorgänge an einem Tropfen zeigen, daß ein Stoffaustausch praktisch nur in monomolekularer Schicht an der Oberfläche erfolgt. Ist diese Schicht gesättigt, so findet eine weitere Diffusion kaum mehr statt. Der anteilige Sauerstoffertrag im Bereich der Flüssigkeitstropfen kann also auch nur relativ gering sein. Der weitaus größte Anteil ergibt sich innerhalb der Flüssigkeit beim Stoffaustausch an der Grenzfläche der einzelnen Blasen. Dies ist auch die Ursache für die gute Wirksamkeit der Druckluftbegasung. Bei der bekannten mechanischen Belüftung halten sich, wie bereits angedeutet, die Blasen im wesentlichen im Bereich des Beckenrandes im Schwebezustand und steigen nur zögernd auf. Die Blasenform ändert sich dabei kaum. Hier dürfte der wesentliche Fortschritt des erfindungsgemäßen Verfahrens darin liegen, daß die frisch gebildete Blase in die Tiefe gefördert wird, dadurch einem sich ständig ändernden Außendruck unterliegt, wodurch sich der Gas-Partialdruck in der Blase ändert. Die gleiche Druckänderung in umgekehrter Richtung ergibt sich dann im Bereich des Beckenrandes beim Aufsteigen der Blase. Aufgrund dieses variierenden Drucks werden die Diffusionsvorgänge ganz erheblich begünstigt. Hinzu kommt eine ständige Formänderung der Blase aufgrund der erzwungenen Umwälzbewegung, so daß davon ausgegangen werden kann, daß der in der Blase enthaltene Luftsauerstoff tatsächlich in vollem Umfang an dem Stoffaustausch teilnimmt.

Das erfindungsgemäße Verfahren läßt sich mit verschiedenen Vorrichtungen ausführen. Eine zweckmäßige Vorrichtung zur Durchführung des Verfahrens kann so aufgebaut sein, daß als Förderelement ein bevorzugt oberflächennah angeordneter Rotor, als in der Flüssigkeit freistehender divergierender Rotationskörper mit vertikaler Drehachse vorgesehen und mit seiner kleineren Stirnfläche oberflächenseitig angeordnet ist, und daß auf der äußeren Fläche des Rotationskörpers von oben nach unten verlaufende Rippen vorgesehen sind.

Ein solcher Rotor, der zweckmäßig als nicht durchströmbarer einseitig offener Hohlkörper ausgebildet ist, erzeugt bei schnellem Umlauf im Bereich seiner äußeren Fläche zwei oder mehr Wirbeltromben, die sich von zufallsbestimmten Ansatzstellen der Oberfläche her ausbilden und die in der Tiefe der Flüssigkeit aufgerissen werden, wodurch die angesaugte Luft in der Tiefe in Blasen dispergiert wird. Zugleich erzeugt der Rotor an der Oberfläche eine Strömung von außen nach innen sowie in der Tiefe eine Sohlströmung von innen nach außen, also eine insgesamt kreisende Umwälzbewegung. Dabei tritt ein weiterer günstiger Effekt insoweit ein, als nur Blasen von relativ kleinem Durchmesser in die Tiefe gedrückt werden, d. h. alle sich am Rotor ausbildenden Blasen größeren Durchmessers verharren dort solange, bis sie « zerschlagen » sind. Je nach Umlaufgeschwindigkeit des Rotors werden die Wirbeltromben mehr oder weniger in Umlaufrichtung mitgezogen. Praktische Versuche haben gezeigt, daß die optimale Drehzahl in für ihre Erzeugung technisch vertretbaren Grenzen liegt.

Anstelle einer Rippenanordnung können zur Erzielung gleichartiger Wirkungen auch andere die Bildung von Wirbeltromben ermöglichende Oberflächenbelegungen des Rotationskörpers, beispielsweise ein Rauhbelag oder dergleichen, angewendet werden.

Der Rotationskörper kann ein Kegelstumpf sein, wodurch sich eine besonders einfache Herstellungsmöglichkeit ergibt.

In einer zweckmäßigen Ausführung können die Rippen schraubenlinienförmig ausgebildet sein. Eine andere gegebenenfalls vorteilhafte Ausführung kann Rippen vorsehen, die wenigstens abschnittsweise auf Fallinien der äußeren Fläche des Rotationskörpers verlaufen. Eine günstige Anordnung verwendet eine scharfkantige Ausbildung der Rippen, wodurch die gewünschte Erzeugung der Wirbeltromben gefördert wird.

In bevorzugter Ausführung der Erfindung nimmt die Höhe der Rippen in Divergenzrichtung des Rotationskörpers von oben nach unten ab. Durch diese Maßnahme werden die erforderlichen Antriebskräfte erheblich vermindert. Es hat sich gezeigt, daß die Rippen nur im oberen Einlaufbereich eine nennenswerte Höhe aufweisen müssen, um die Wirbeltromben zu erzeugen. In der Tiefe hingegen dienen sie nur noch zur Aufrechterhaltung der Scherströmung, die zur Zerstörung der Wirbeltromben führt. Hier reicht daher eine sehr geringe Rippenhöhe aus.

Die Ausbildung der Außenkante der Rippe läßt sich zwar noch durch eine dem Geschwindigkeitsprofil Rechnung tragende Kurve optimieren, jedoch wird diese Kurve durch eine linear abnehmende Rippenhöhe offensichtlich so stark angenähert, daß ein nennenswert besserer Effekt durch eine solche Kurvenform nicht erreicht wird.

Eine alternative Vorrichtung zur Durchführung des Verfahrens unter Verwendung einer beispielsweise aus der US-A 2 295 391 bekannten Axialpumpe mit vertikaler Achse als Förderelement kann vorteilhaft so aufgebaut sein, daß die Axialpumpe im oberflächennahen Bereich eine Ringspalt-Ansaugöffnung aufweist.

Die Axialpumpe saugt die Flüssigkeit über die umfangseitige Ringspalt-Ansaugöffnung an und drückt sie über einen Rohrstutzen in die Tiefe des Beckens. Aufgrund der oberflächennahen Ansaugströmung werden im Ringbereich der Ansaugöffnung sich frei ausbreitende Wirbeltromben gebildet und somit Luft in den Ansaugstutzen der Pumpe angesaugt, die schon beim Ansaugvorgang und schließlich auch durch das Pumpenrad blasenförmig zerteilt wird.

Die erfindungsgemäß ausgebildeten Vorrichtungen ergeben gegenüber den für die mechanische Belüftung vorbekannten Anlagen einen weiteren wesentlichen Vorteil: Da der Sauerstoffanteil der Luft relativ gering ist, empfiehlt es sich, den Belebtschlamm mit reinem Sauerstoff zu begasen. Dies erfordert bei den bekannten Anlagen eine komplette Abdeckung der Becken. Bei der erfindungsgemäßen Ausbildung der Vorrichtungen hingegen ist lediglich oberhalb des Rotationskörpers bzw. der Axialpumpe im Ansatzbereich der Wirbeltromben eine Sauerstoffhaube von relativ kleinem Durchmesser vorzusehen, die an eine Sauerstoffquelle angeschlossen ist. Auf diese Weise läßt sich bei geringem apparativem Aufwand der Sauerstoffertrag erheblich verbessern.

Wie bereits eingangs erwähnt, lassen sich das Verfahren und die Vorrichtungen gemäß der Erfindung überall dort anwenden, wo es um einen möglichst effektiven Eintrag von Gasen in Flüssigkeiten geht und wo die reine Druckluftbegasung aus technischen oder wirtschaftlichen Gründen unterlegen ist.

In der Zeichnung sind Ausführungsbeispiele der Erfindung schematisch dargestellt ; es zeigen :

Figur 1 eine schematische Ansicht eines Beckens mit eingesetztem Rotor ;

Figur 2 eine gegenüber Figur 1 abgewandelte Ausführungsform ;

Figur 3 eine in ein Becken eingesetzte Axialpumpe mit ringförmiger Ansaugöffnung.

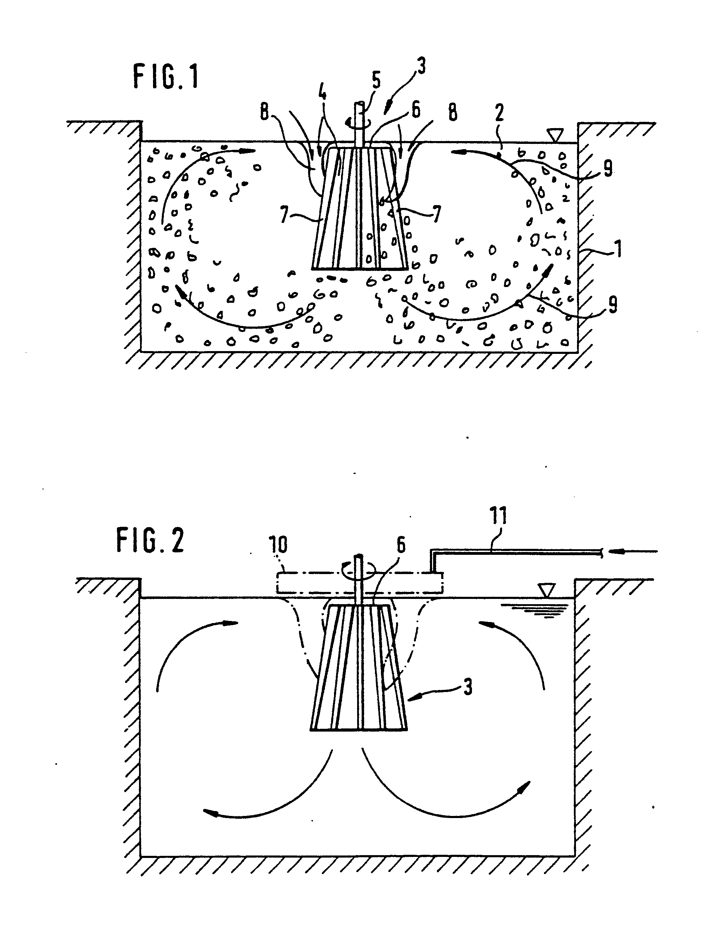

In Figur 1 ist ein Becken, z. B. ein Blockbecken 1 gezeigt, das bis nahe seiner Oberseite mit Belebtschlamm 2 gefüllt ist. Etwa in der Beckenmitte ist ein Rotor 3 an einer nicht gezeigten Brücke gelagert, der von einem Elektromotor mit veränderlicher Drehzahl angetrieben ist.

Der Rotor 3 ist als Kegelstumpf 4 ausgebildet und mit seiner vertikalen Achse 5 so angeordnet, daß sich seine kleinere Stirnfläche 6 oben nahe der Oberfläche befindet. Der Kegelstumpf 4 ist mit Rippen 7 versehen, die entlang Fallinien verlaufen und — wie die Zeichnung erkennen läßt — eine von der kleinen zur großen Stirnfläche, also von oben nach unten abnehmende Höhe aufweisen. Bei Umlauf des Rotors 3 — gleichviel in welcher Richtung — bilden sich am Umfang der kleineren Stirnfläche 6 ein oder mehrere Wirbeltromben, die in der Zeichnung mit 8 angedeutet sind. Über diese Wirbeltromben wird, wie mit den Pfeilen angezeigt, Luft in die Tiefe der Flüssigkeit angesaugt. Die so gebildeten Wirbeltromben werden aufgrund der Scherströmung in der Tiefe der Flüssigkeit zerstört und die angesaugte Luft, wie in Fig. 1 erkennbar, als Blasen kleinen Durchmessers in der Flüssigkeit dispergiert. Zugleich erzeugt der Rotor eine radial-tangential ausgerichtete Umwälzbewegung, die mit den Pfeilen 9 angedeutet ist. Aufgrund dieser Umwälzbewegung werden die am Rotor entstehenden Luftblasen in die Tiefe des Beckens und von der Beckensohle nach oben transportiert, wobei der in ihnen enthaltene Sauerstoff in die Flüssigkeit diffundiert, so daß sie bei Erreichen der Oberfläche annähernd inaktiv geworden sind.

Bei der Ausführungsform gemäß Fig. 2 ist der Rotor 3 im Bereich seiner kleinen Stirnfläche von einer Haube 10 überdeckt, die über eine Leitung 11 an eine nicht gezeigte Sauerstoffquelle angeschlossen ist. Die Haube ist dabei so weit nach außen gezogen, daß sie in jedem Fall den Bereich der Flüssigkeitsoberfläche, in welchem die Wirbeltromben entstehen, übergreift. Auf diese Weise wird der Flüssigkeit reiner Sauerstoff zugeführt, so daß der Sauerstoffertrag entsprechend besser ist.

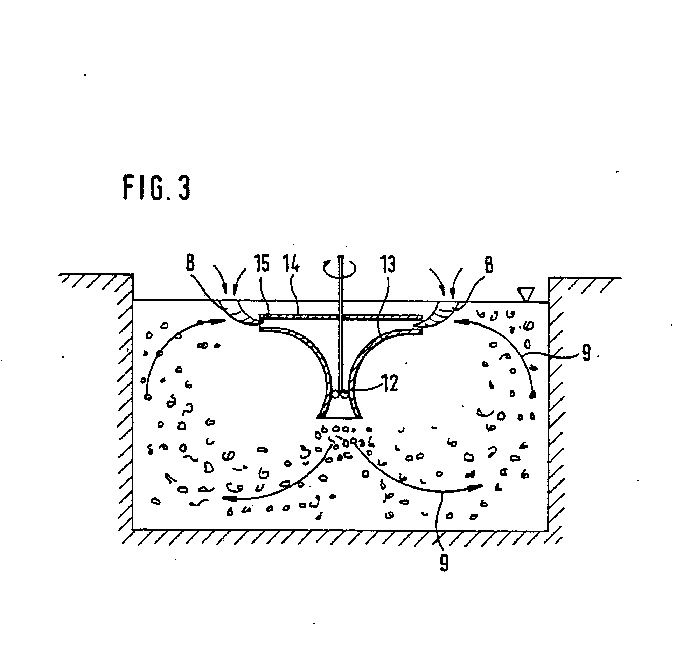

Bei der Ausführungsform gemäß Fig. 3 ist eine Axialpumpe 12 vorgesehen, deren Ansaugstutzen 13 sich nach außen stark erweitert und im oberflächennahen Bereich durch eine Platte 14 mit Abstand überdeckt ist. Dadurch entsteht umfangsseitig eine ringförmige Ansaugöffnung 15, über die die oberflächennahe Flüssigkeit angesaugt und in die Tiefe gefördert wird, so daß auch hier wieder gemäß den Pfeilen 9 eine kreisende, radialtangentiale Umwälzbewegung der Flüssigkeit stattfindet. Aufgrund des Unterdruckbereichs an der Ansaugöffnung bilden sich zugleich von der Oberfläche her ausgehende Wirbeltromben 8, die in die Ansaugöffnung hineingezogen und dort spätestens durch das Flügelrad der Axialpumpe 12 zu Blasen dispergiert werden, die wiederum über den Druckstutzen der Axialpumpe in die Tiefe transportiert werden.

## Patentansprüche

1. Verfahren zum Begasen und Umwälzen von als Flüssigkeit fließfähigen Medien, insbesondere zum Belüften von Belebtschlamm im Belüftungsbecken von Kläranlagen, wobei mit Hilfe eines unterhalb der Flüssigkeitsoberfläche angeordneten, eine rotierende Strömung erzeugenden Förderelementes, eine zwischen der Oberfläche der Flüssigkeit zum Förderelement hin und der Beckensohle torusförmigkreisende Strömung erzeugt wird, und bei dem durch das Förderelement von der Flüssigkeitsoberfläche sich zum Förderelement erstreckende Wirbeltromben erzeugt werden, wobei das von ihnen angesaugte Gas in der Flüssigkeit blasenförmig dispergiert wird, dadurch gekennzeichnet, daß die Wirbeltromben von einem in etwa ringförmigen Bereich an der Flüssigkeitsoberfläche zum Umfang des Förderelementes hin sich frei ausbreitend erzeugt werden.

2. Vorrichtung zur Durchführung des Verfahrens nach Anspruch 1, dadurch gekennzeichnet, daß das Förderelement als nicht durchströmbarer, divergierender Rotationskörper (3) mit vertikaler Drehachse ausgebildet und mit seiner kleineren Stirnfläche (6) zur Oberfläche der Flüssigkeit hin angeordnet ist, und daß auf der äußeren Fläche des Rotationskörpers von oben nach unten verlaufende Rippen (7) oder entsprechende Oberflächenbelegungen, wie z. B. ein Rauhbelag, vorgesehen sind.

3. Vorrichtung nach Anspruch 2, dadurch gekennzeichnet, daß der Rotationskörper (3) als einseitig offener Hohlkörper ausgebildet ist.

4. Vorrichtung nach Anspruch 2 oder 3, dadurch gekennzeichnet, daß der Rotationskörper (3) kegelstumpfförmig gestaltet ist.

5. Vorrichtung nach Anspruch 2, 3 oder 4, dadurch gekennzeichnet, daß die Rippen (7) auf der äußeren Fläche des Rotationskörpers (3) schraubenlinienförmig ausgebildet sind.

6. Vorrichtung nach Anspruch 2, 3 oder 4, dadurch gekennzeichnet, daß die Rippen (7) wenigstens abschnittsweise auf Fallinien der äußeren Fläche des Rotationskörpers (3) angeordnet sind.

7. Vorrichtung nach Anspruch 2 bis 6, dadurch gekennzeichnet, daß die Rippen (7) scharfkantig ausgebildet sind.

8. Vorrichtung nach einem der Ansprüche 2-7, dadurch gekennzeichnet, daß die Höhe der Rippen (7) in Divergenzrichtung des Rotationskörpers (3) abnimmt.

9. Vorrichtung zur Durchführung des Verfahrens nach Anspruch 1, dadurch gekennzeichnet, daß das Förderelement als Axialpumpe (12) ausgebildet ist, welche im oberflächennahen Bereich eine Ringspaltansaugöffnung (15) aufweist.

10. Vorrichtung nach Anspruch 2 oder 9, dadurch gekennzeichnet, daß oberhalb des Rotationskörpers (3) bzw. der Axialpumpe (12) im Ansatzbereich der Wirbeltromben eine Sauerstoffhaube (10) angeordnet ist.

## Claims

1. Process and device for mixing and circulating gases and liquids particularly for the aeration of activated sludge in aeration tanks of treatment plants, where a conveying element, arranged below the surface of the liquid, produces a circulating flow of liquid, rotating between the surface of said liquid and the bottom of said tank in the form of a torous and where the said conveying element generates vortex tubes initiating from adventitious positions at the surface of said liquid, and thereby entraining gas downwardly into said flow of liquid in form of bubbles, characterized by vortex tubes and thereby the vortex tubes are generated freely extending from an area at the liquid surface in form of a ring up to the surface of said conveying element.

2. A device for carrying out the process as claimed in claim 1, characterized by a conveying element which the liquid does not flow through, which comprises the rotor being formed as a divergent solid of rotation (3) with vertical rotation axis, and which rotor is arranged with its smaller face (6) in direction to the surface of the liquid, and there being provided on the external surface of the solid of rotation with ribs (7) or corresponding elements at the surface, e. g. a rough surface of the rotor running from top to bottom.

3. A device as claimed in claim 2, characterized by a solid of rotation (3) in form of a hollow body, open at one side.

4. A device as claimed in claim 2 or 3, characterized by a solid of rotation (3) in form of a truncated cone.

5. A device as claimed in claim 2, 3 or 4, characterized by ribs (7), which are formed as helices on the external surface of the solid of rotation (3).

6. A device as claimed in claim 2, 3 or 4, characterized by ribs (7), located at least in sections, on lines of greatest slope of the external surface of the solid of rotation (3).

7. A device as claimed in claim 2 to 6, characterized by ribs (7) formed with sharp edges.

8. A device as claimed in one of the claims 2 to 7, characterized by ribs (7), decreasing in the direction of divergence of the solid of rotation (3).

9. A device for carrying out the process as claimed in claim 1, characterized by a conveying element in form of an axial-flow pump (12), which comprises an annular suction opening (15) in the section near the surface.

10. A device as claimed in claim 2 or 9, characterized by an oxygen hood (10), located above the solid of rotation (3), or the axialflow pump (12) in the region where the surface vortex tubes with air entrainment are initiated.

## Revendications

1. Procédé et dispositif de gazéification et de brassage de liquides, particulièrement pour l'aération des boues activées dans le bassin d'aération des stations d'épuration, un élément d'agitation étant arrangé sous la surface du liquide, produisant un courant rotatif, circulant entre la surface dudit liquide et le fond dudit bassin en forme de torus, ledit élément d'agitation produisant des trombes des tourbillons, commençant à positions accidentelles à la surface dudit liquide, en entraînant du gaz vers le bas dans ledit courant de liquide en forme de bulles, caractérisé par les trombes des tourbillons, étant produites librement, s'étendant d'une zone à la surface du liquide en forme d'anneau vers la surface dudit élément agitatif.

2. Dispositif destiné à l'exécution du procédé suivant la revendication 1, caractérisé par un élément d'agitation n'étant pas traversé par le liquide, comprenant le rotor en forme de corps de rotation (3) divergent avec axe de rotation verticale, lequel est arrangé avec sa face mineure (6) en direction de la surface du liquide, étant muni de nervures (7) ou d'éléments correspondants sur la face extérieure du corps de rotation, p. ex. une surface rugueuse passant de haut en bas.

3. Dispositif suivant la revendication 2, caractérisé par un corps de rotation (3) en forme de corps creux, ouvert d'un côté.

4. Dispositif suivant la revendication 2 ou 3, caractérisé par un corps de rotation (3) en forme de tronc dé cône.

5. Dispositif suivant la revendication 2, 3 ou 4, caractérisé par nervures (7) en forme d'hélice sur la surface extérieure du corps de rotation (3).

6. Dispositif suivant la revendication 2, 3 ou 4, caractérisé par nervures (7), arrangées au moins en sections, sur lignes de la plus grande pente de la surface extérieure du corps de rotation (3).

7. Dispositif suivant la revendication 2 à 6, caractérisé par nervures (7) acutangulaires.

8. Dispositif suivant l'une quelconque des revendications 2 à 7, caractérisé par nervures (7), se diminuant en direction de divergence du corps de rotation (3).

9. Dispositif destiné à l'exécution du procédé suivant la revendication 1, caractérisé par un élément d'agitation en forme de pompe axiale (12), comprenant une ouverture d'aspiration annulaire (15) dans la zone de surface.

10. Dispositif suivant la revendication 2 ou 9, caractérisé par un bonnet d'oxygène (10), arrangé au-dessus du corps de rotation (3) resp. de la pompe axiale (12) dans la zone des trombes des tourbillons.

FIG.1

FIG.2

# FIG. 3